## Europäisches Patentamt
## European Patent Office
## Office européen des brevets

(19)

(11) Numéro de publication: **0 214 901**
**B1**

(12)

# FASCICULE DE BREVET EUROPÉEN

(45) Date de publication du fascicule du brevet:
**15.11.89**

(51) Int. Cl.⁴: **B 05 B 15/04,** B 04 C 9/00

(21) Numéro de dépôt: **86401824.7**

(22) Date de dépôt: **18.08.86**

(54) Procédé de récupération de poudre et dispositif pour la mise en oeuvre de ce procédé.

(30) Priorité: **22.08.85 FR 8512613**

(43) Date de publication de la demande:
**18.03.87 Bulletin 87/12**

(45) Mention de la délivrance du brevet:
**15.11.89 Bulletin 89/46**

(84) Etats contractants désignés:
**CH DE GB IT LI NL SE**

(56) Documents cité:
**FR-A-1 130 633**
**FR-A-1 302 617**
**GB-A-1 198 129**
**US-A-3 698 874**
**US-A-4 245 551**

(73) Titulaire: **SAMES S.A., Z.I.R.S.T. Chemin de Malacher, F-38240 Meylan (FR)**

(72) Inventeur: **Correard, Jean- Yves, 30 Place J.B. Clément, F-38400 Saint Martin D'Heres (FR)**

(74) Mandataire: **CABINET BONNET- THIRION, 95 Boulevard Beaumarchais, F-75003 Paris (FR)**

LIBER, STOCKHOLM 1989

## Description

L'invention concerne un procédé de récupération de poudre, notamment pour le recyclage des poudres de revêtement dans les installations de poudrage où des objets à recouvrir sont exposés à une projection de poudre, de préférence avec application d'une charge électrostatique, avant d'être soumis à un traitement thermique transformant la poudre en une couche homogène et résistante.

L'invention concerne aussi plusieurs modes de réalisation d'un dispositif mettant en oeuvre ce procédé et incorporant notamment des moyens séparateurs pour extraire la poudre du mélange air-poudre aspiré, ces moyens connus pouvant fonctionner à une pression différente de la pression atmosphérique.

Une installation de poudrage, notamment électrostatique, comporte généralement une sorte de cabine dans laquelle transitent les objets à recouvrir, pour y être exposés à des projections de poudre. Une fois recouverts d'une couche relativement uni forme mais non adhérente, les objets passent dans un four où la poudre se transforme en un revêtement homogène et très résistant. Les procédés de poudrage présentent donc certains avantages sur les procédés de projection de peinture, d'une part parce qu'aucun solvant ne s'évapore au voisinage de l'installation, et d'autre part parce que la poudre qui ne s'est pas déposée sur les objets peut être récupérée et recyclée. Pour ce faire, l'air est aspiré de la cabine et on utilise un séparateur aérodynamique de type connu, pour séparer la poudre de l'air et donc épurer ce dernier. Parmi ces séparateurs, on utilise souvent un appareil connu sous le nom de "CYCLONE" qui consiste en une enceinte à paroi cylindrique et/ou tronconique, dans lequel l'air chargé de poudre est introduit tangentiellement pour créer un effet tourbillonnaire ayant pour résultat, sous l'effet de la force centrifuge engendrée, de rejeter la poudre vers la paroi de l'enceinte pour être ensuite récupérée; l'air épuré étant évacué par un conduit axial. D'autres appareils de séparation peuvent être utilisés.

La récupération effective de la poudre, généralement accumulée dans un réservoir à la sortie de ce genre de séparateur pose un problème dû au fait que celui-ci peut fonctionner à une pression différente de la pression atmosphérique, généralement en légère dépression. Les solutions auxquelles on a eu recours jusqu'à présent ne sont pas entièrement satisfaisantes:

- La solution la plus simple consiste à arrêter périodiquement la ventilation pour vider le réservoir de son contenu, généralement manuellement. Ceci est difficilement envisageable sur une installation imporante qui doit assurer une production continue. En outre, une main-d'oeuvre importante est nécessaire.
- Sur des installations automatiques on utilise souvent un bac de réception comportant un compartiment susceptible d'être isolé après avoir reçu une partie de la poudre. Ce compartiment est ensuite vidé progressivement de son contenu, pour le recyclage de la poudre, par mise sous pression de celui-ci. Ce type d'agencement est coûteux, ainsi que son entretien.
- Il est possible d'aspirer directement la poudre du réservoir, grâce à un appareil à succion, à condition de pouvoir disposer d'une dépression suffisante.

Le brevet US N° 4 245 551 décrit un dispositif de récupération à filtres où une partie de la poudre qui s'accumule au fond d'une trémie est fluidisée pour être transportée vers un autre réservoir.

L'invention propose une solution de mise en oeuvre très simple et peu coûteuse, adaptable à des installations à production continue dans laquelle de la poudre fluidisée est mise en oeuvre pour compenser la différence de pression.

Dans cet esprit, l'invention se rapporte essentiellement à un procédé de récupération de poudre provenant de moyens séparateurs pouvant fonctionner à une pression différente de la pression atmosphérique, caractérisé en ce qu'il consiste à fluidiser de la poudre dans une colonne au fond d'un réceptacle en communication avec lesdits moyens séparateurs pour créer une hauteur manométrique de poudre fluidisée et compenser ainsi un écart de pression imposé par lesdits moyens séparateurs.

L'invention a également pour objet un dispositif de récupération de poudre comprenant des moyens séparateurs, pouvant fonctionner à une pression différente de la pression atmosphérique, tels que par exemple des moyens pour séparer et extraire ladite poudre en suspension dans de l'air en circulation et un réceptacle de la poudre agencé sous et communiquant avec lesdits moyens séparateurs et muni de moyens pour fluidiser la poudre caractérisé en ce que ledit réceptacle comprend au moins une colonne ascendante ou analogue, constituée par un conduit monté dans le prolongement inférieur desdits moyens séparateurs et communiquant avec eux, en ce que lesdits moyens pour fluidiser la poudre sont aptes à fluidiser la poudre notamment dans ladite colonne ascendante et en ce que cette colonne comporte une sortie de poudre.

L'invention apparaîtra plus clairement à la lumière de la description qui va suivre de plusieurs dispositifs de récupération de poudre conformes à son principe, donnée uniquement à titre d'exemple et faite en référence aux dessins annexés dans lesquels:

- la figure 1 représente schématiquement et en élévation un séparateur du type "CYCLONE" pourvu des perfectionnements de l'invention;
- la figure 2 illustre une variante de l'invention reprenant le séparateur de la figure 1;
- la figure 3 illustre une autre variante de l'invention avec un séparateur analogue ou un récupérateur; et

- la figure 4 illustre encore une autre variante avec un autre type de récupérateur.

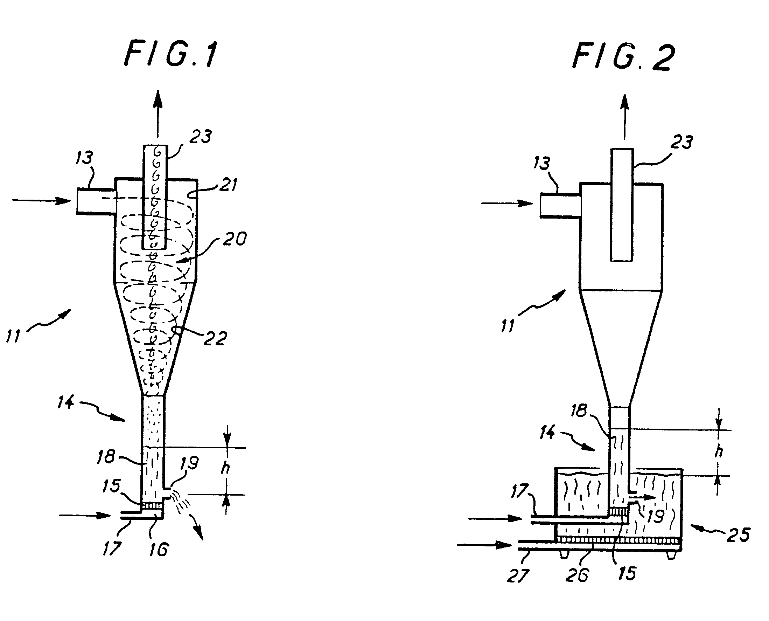

En se reportant plus particulièrement à la figure 1, on a représenté un séparateur aérodynamique du type "CYCLONE" 11 pour récupérer de la poudre en suspension dans l'air introduit par son conduit d'entrée 13. Cet extracteur est modifié conformément au principe de l'invention, c'est-à-dire qu'il est prolongé à sa partie inférieure par un réceptacle, ici réduit à une colonne ascendante 14 (un simple conduit vertical dans l'exemple représenté) lequel réceptacle est en communication avec le séparateur 11. Par ailleurs, et selon une autre caractéristique de l'invention, des moyens sont prévus pour fluidiser la poudre accumulée au pied de la colonne ascendante 14. Dans l'exemple, ces moyens sont ici constitués par une plaque poreuse 15 agencée en partie basse de la colonne 14, l'air de fluidisation, sous pression, étant amené sous cette plaque 15 dans une chambre étanche 16, par un conduit 17. La pression de l'air est contrôlée de façon que la plaque poreuse 15 soit traversée par une quantité d'air juste suffisante pour assurer la fluidisation de la poudre 18.

De plus, le réceptacle en forme de colonne 14 comporte un orifice latéral 19 situé un peu au-dessus de la plaque poreuse 15, pour la récupération de la poudre contenue dans celui-ci. Enfin, de façon connue, le séparateur de type "CYCLONE" 11 se compose d'une enceinte 20 constituée d'un tronçon cylindrique 21, supérieur, et d'un tronçon tronconique 22, inférieur, formant trémie. L'air chargé de poudre est introduit tangentiellement par le conduit d'entrée 13 débouchant dans le tronçon cylindrique 21 et ressort épuré par un conduit de sortie 23, axial, fixé la paroi supérieure du séparateur et se prolongeant d'une certaine distance l'intérieur de celui-ci. Le fonctionnement est le suivant.

Lorsque l'air chargé de poudre provenant d'une ou plusieurs cabines de poudrage (non représentées) est introduit une certaine vitesse par le conduit d'entrée 13, il se crée, de façon connue, un double tourbillon (représenté par des tracés en hélice sur la figure 1) d'abord descendant depuis le tronçon cylindrique 21 vers le tronçon tronconique 22, puis ascendant au voisinage de l'axe et remontant jusqu'au conduit de sortie 23. L'air évacué par ce dernier est sensiblement exempt de poudre puisque les particules de poudre, plus denses, sont entraînées par la force centrifuge et viennent s'accumuler au fond du réceptacle en forme de colonne 14. Dès que cette poudre est fluidisée par une injection d'air au travers de la plaque poreuse 15, elle se comporte sensiblement comme un liquide, c'est-à-dire notamment qu'elle peut s'écouler librement par l'orifice 19 pour être récupérée dans un bac récepteur (non représenté) en vue de son recyclage. Surtout, la dépression qui règne dans le séparateur 11 est automatiquement compensée par une hauteur manométrique $h$ (ou hauteur de colonne) matérialisée par la poudre fluidisée elle-même, au-dessus de l'orifice 19 au niveau duquel règne la pression atmosphérique. Le niveau de poudre fluidisée se stabilise automatiquement en fonction de la valeur de la dépression qui règne dans le séparateur et un équilibre de fonctionnement s'établit ainsi. Autrement dit, pour une valeur de dépression stabilisée, toute quantité supplémentaire de poudre déversée à la partie supérieure du réceptacle entraîne l'évacuation d'une quantité équivalente de poudre par l'orifice 19. Les manipulations peuvent s'effectuer à l'air libre à l'extérieur du séparateur, sans risque de formation de fumée.

La figure 2 représente une variante dans laquelle les éléments de structure identiques à ceux de la figure 1 portent les mêmes références numériques et ne seront pas décrits à nouveau. Selon cette variante, le dispositif décrit ci-dessus a une partie de sa colonne 14 plongée dans un réservoir 25 de poudre fluidisée. Dans ce mode de réalisation particulier, le réceptacle défini plus haut comporte donc à la fois la colonne 14 et le réservoir 25. L'orifice 19 plonge dans ce dernier. De façon classique, les moyens de fluidisation de la poudre contenue dans le réservoir 25 peuvent, comme précédemment, être constitués par une plaque poreuse 26 formant double fond sous laquelle l'air sous pression est injecté au moyen d'un conduit 27. Avec cet agencement, la poudre peut être directement prélevée dans le réservoir 25 pour alimenter les dispositifs de pulvérisation. Cette fois, la hauteur de poudre $h$ qui équilibre la dépression dans l'extracteur 11 se mesure entre le niveau de poudre dans le réservoir 25 et le niveau de poudre dans la colonne 14. La poudre déversée dans celle-ci va progressivement passer dans le réservoir 25, par l'ouverture 19, comme dans un système de vases communicants.

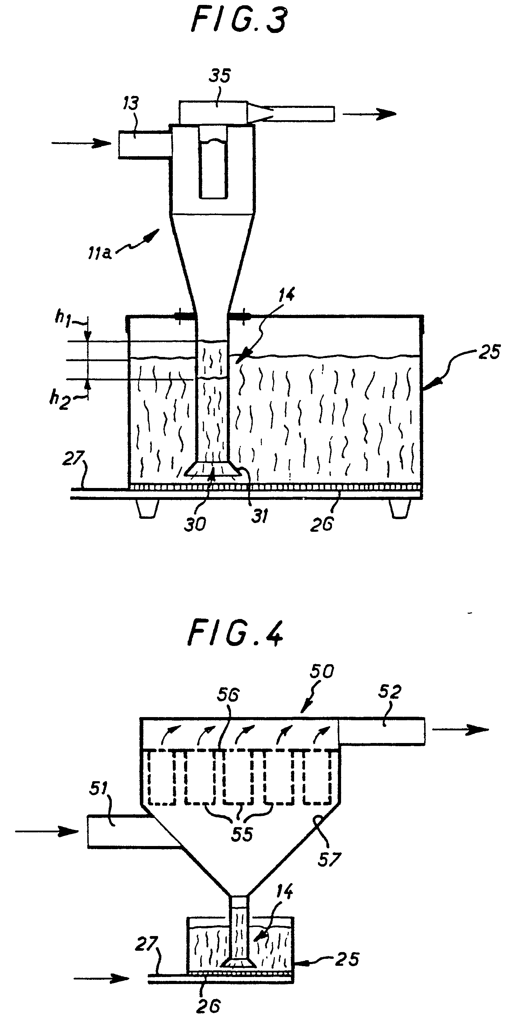

La figure 3 montre qu'il est possible de simplifier encore l'agencement en supprimant les moyens de fluidisation de la colonne 14 et en exploitant ceux du réservoir 25. Pour cela, il suffit que la colonne 14 plongeant dans le réservoir soit sensiblement complètement ouverte à son extrémité inférieure 30 de façon que les moyens de fluidisation de la cuve entretiennent aussi la fluidisation dans la colonne. Il est aussi avantageux que cette extrémité 30 comporte une collerette évasée 31 favorisant l'entretien de la fluidisation. En effet, par cet agencement simple, la colonne 14 récupère davantage d'air de fluidisation et ce surplus d'air circule préférentiellement le long de la paroi interne de la colonne. On peut ainsi détruire un éventuel bouchon de poudre qui pourrait se former au pied de la colonne lorsque l'installation est arrêtée. La figure 3 représente plus particulièrement un séparateur 11a de recyclage (de type "CYCLONE" mais de relativement petite dimension, encore appelé récupérateur) alors que les séparateurs 20 des figures 1 et 2 sont plus spécifiquement des appareils d'épuration d'air, de grande dimension. Cependant, la structure de la colonne 14 du dispositif de la figure 3 est adaptable telle quelle à un séparateur épurateur décrit en référence aux figures 1 et 2. En ce qui concerne plus particulièrement le séparateur de recyclage 11a, dans lequel circule de l'air avec une forte concentration de poudre, l'évacuation de l'air, en grande partie débarrassé de la poudre, se fait grâce à un appareil à succion 35 ou par raccordement direct à un conduit d'extraction d'air. L'aspiration a lieu généralement en continu et par conséquent, en l'absence de recyclage de poudre, le séparateur 11a et la colonne 14 sont en légère dépression, compensée par une hauteur $h_1$ de poudre fluidisée dans la colonne. En revanche, lorsque par intermittence, l'appareil passe en phase de recyclage et que de l'air chargé de poudre est injecté sous pression (par rapport à la pression atmosphérique) par le conduit 13, l'écart de pression est compensé par une hauteur $h_2$ "négative" par rapport au niveau de poudre dans la cuve. Il est remarquable qu'on n'injecte jamais d'air supplémentaire dans le réservoir 25 au moment de la mise en route du recyclage, ce qui pourrait provoquer des émanations de poudre sortant du réservoir 25, sous forme de "fumée" très gênante pour le personnel.

Bien entendu, le type de colonne décrit en référence aux figures 1 et 2 est utilisable dans le système de la figure 3 et réciproquement. Cette remarque est valable pour le dispositif de la figure 4 qui ne diffère de celui de la figure 3 que par la nature du séparateur. Dans ce dispositif, le séparateur 50 n'est plus du type "CYCLONE" mais se compose simplement d'un caisson comprenant une entrée d'air 51 par laquelle pénètre de l'air entraînant de la poudre et une sortie d'air 52 par laquelle de l'air relativement épuré est rejeté. La circulation d'air est obtenue ici par des moyens d'aspiration non représentés, reliés à la sortie 52. Entre l'entrée 51 et la sortie 52 sont agencés des filtres secs 55, classiques, montés sur un support mobile 56 pour pouvoir être "secoués" de temps à autre, de façon que la poudre retenue par ces filtres tombent dans une trémie 57. La colonne 14 est raccordée à la partie inférieure de cette trémie.

## Revendications

1. Procédé de récupération de poudre provenant de moyens séparateurs (11, 11a, 50) pouvant fonctionner à une pression différente de la pression atmosphérique, caractérisé en ce qu'il consiste à fluidiser (15) de la poudre dans une colonne (14) au fond d'un réceptacle en communication avec lesdits moyens séparateurs pour créer une hauteur manométrique (h) de poudre fluidisée et compenser ainsi un écart de pression imposé par lesdits moyens séparateurs.

2. Dispositif de récupération de poudre comprenant des moyens séparateurs (11, 11a, 50) pouvant fonctionner à une pression différente de la pression atmosphérique, tels que par exemple des moyens pour séparer et extraire ladite poudre en suspension dans de l'air en circulation et un réceptacle de la poudre agencé sous et communiquant lesdits moyens séparateurs et muni de moyens pour fluidiser la poudre, caractérisé en ce que ledit réceptacle comprend au moins une colonne ascendante (14) ou analogue, constituée par un conduit monté dans le prolongement inférieur desdits moyens séparateurs et communiquant avec eux, en ce que lesdits moyens pour fluidiser la poudre (15, 26) sont aptes à fluidiser la poudre notamment dans ladite colonne ascendante et en ce que cette colonne comporte une sortie de poudre (19, 30).

3. Dispositif selon la revendication 2, caractérisé en ce que lesdits moyens séparateurs (11, 11a) comprennent un séparateur de type "CYCLONE", connu en soi.

4. Dispositif selon la revendication 2, caractérisé en ce que lesdits moyens séparateurs (50) comportent un caisson comprenant une entrée d'air (51) et une sortie d'air (52) entre lesquelles sont agencés des moyens de filtrage (55) surmontant une trémie de réception (57) et en ce que ladite colonne ascendante (14) est constituée par un conduit raccordé à la partie inférieure de ladite trémie.

5. Dispositif selon l'une des revendications 3 ou 4, caractérisé en ce que la sortie de poudre de ladite colonne (14) est un orifice latéral (19).

6. Dispositif selon l'une quelconque des revendications 3 à 5, caractérisé en ce qu'un tronçon inférieur de ladite colonne ascendante (14) est plongé dans un réservoir (25) contenant de la poudre et muni de moyens de fluidisation (26, 27) de cette poudre et en ce que ladite colonne communique avec ledit réservoir.

7. Dispositif selon l'une des revendications 3 à 6, caractérisé en ce que lesdits moyens pour fluidiser ladite poudre dans ladite colonne comportent une plaque poreuse (15) agencée en partie basse de ladite colonne et traversée par de l'air sous pression.

8. Dispositif selon l'une des revendications 3 à 6, caractérisé en ce que l'extrémité inférieure de ladite colonne ascendante (14) plongeant dans ledit réservoir (25) est sensiblement complètement ouverte (30) de façon que les moyens de fluidisation de ladite cuve entretiennent aussi la fluidisation dans ladite colonne.

9. Dispositif selon la revendication 8, caractérisé en ce que ladite extrémité inférieure (30) ouverte de ladite colonne comporte une collerette évasée (31) favorisant l'entretien de la fluidisation dans ladite colonne.

**Patentansprüche**

1. Verfahren zur Rückgewinnung von Pulver, das von Abscheidermitteln (11, 11a, 50) kommt, die mit einem vom atmosphärischen Druck verschiedenen Druck arbeiten, dadurch gekennzeichnet, dass das Verfahren darin besteht, Pulver in einer Säule (14) am Boden eines Behälters zu fluidisieren, der mit den Abscheidermitteln in Verbindung steht, um eine manometrische Höhe (h) fluidisierten Pulvers zu erzeugen und dadurch einen durch die Abscheidemittel bedingten Druckabfall zu kompensieren.

2. Gerät zur Rückgewinnung von Pulver, mit Abscheidermitteln (11, 11a, 50) die mit einem vom atmosphärischen Druck verschiedenen Druck arbeiten können, wie etwa Mitteln zum Abscheiden und Abziehen des in einem Transportluftstrom suspendierten Pulvers, und mit einem Pulverbehälter, der unter den Abscheidermitteln angeordnet ist und mit diesen in Verbindung steht und Mittel zum Fluidisieren des Pulvers umfasst, dadurch gekennzeichnet, dass der Behälter mindestens eine ansteigende Säule (14) oder dergleichen umfasst, bestehend aus einem in der unteren Verlängerung der Abscheidermittel angebrachten und mit diesem kommunizierenden Rohr, und dass die Mittel (15, 26) zum Fluidisieren des Pulvers in dieser ansteigenden Säule geeignet sind, und dass diese Säule einen Auslass (19, 30) für das Pulver hat.

3. Gerät nach Anspruch 2, dadurch gekennzeichnet, dass die Abscheidermittel (11, 11a,) einen an sich bekannten ZYKLON-Abscheider umfassen.

4. Gerät nach Anspruch 2, dadurch gekennzeichnet, daß die Abscheidermittel (50) einen Kasten umfassen, der mit einem Lufteinlaß (51) und einem Luftauslaß (52) ausgestattet ist, zwischen denen Filtermittel (55) oberhalb eines Aufnahmetrichters (57) angeordnet sind, und daß die ansteigende Säule (14) aus einem mit dem unteren Teil des Trichters verbundenen Rohr besteht.

5. Gerät nach einem der Ansprüche 3 oder 4, dadurch gekennzeichnet, daß der Pulverauslaß der genannten Säule (14) eine seitliche Öffnung (19) ist.

6. Gerät nach einem der Ansprüche 3 bis 5, dadurch gekennzeichnet, daß ein unterer Abschnitt der genannten ansteigenden Säule (14) in einen Pulver enthaltenden und mit Fluidisiermitteln (26, 27) für dieses Pulver versehenen Tank (25) eintaucht, und daß die genannte Säule mit dem Tank kommuniziert.

7. Gerät nach einem der Ansprüche 3 bis 6, dadurch gekennzeichnet, daß die Mittel zum Fluidisieren des Pulvers in der genannten Säule eine poröse Platte (15) umfassen, die im unteren Teil der Säule angeordnet und von Druckluft durchströmt ist.

8. Gerät nach einem der Ansprüche 3 bis 6, dadurch gekennzeichnet, daß das untere Ende der genannten ansteigenden Säule (14), das in den genannten Tank (25) eintaucht, im wesentlichen vollständig offen (30) in der Weise ist, daß die Fluidisiermittel des genannten Tanks auch die Fluidisierung in der genannten Säule unterhalten.

9. Gerät nach Anspruch 8, dadurch gekennzeichnet, daß das genannte offene untere Ende (30) der genannten Säule einen sich erweiternden Abschnitt (31) umfaßt, der die Unterhaltung der Fluidisierung in der genannten Säule begünstigt.

**Claims**

1. A process for the recovery of powder coming from separator means (11, 11a, 50) which an operate at a pressure different from atmospheric pressure characterized in that it comprises fluidising (15) powder in a column (14) at the bottom of a receptacle communicating with said separator means to create a manometric height (h) of fluidised powder and thus compensate for a pressure difference imposed by said separator means.

2. Apparatus for the recovery of powder comprising separator means (11, 11a, 50) which can operate at a pressure different from atmospheric pressure such as for example means for separating and extracting said powder in suspension in circulating air, and a receptacle for the powder arranged under and communicating with said separator means and comprising means for fluidising said powder, characterised in that said receptacle comprise at least one riser column (14) or the like which is formed by a conduit disposed as an extension of said separator means at the bottom thereof and communicating therewith in that said means (15, 26) for fluidising said powder are adapted to fluidise said powder especially in said riser column and in that said riser column comprises a powder outlet (19, 30).

3. Apparatus according to claim 2 characterised in that said separator means (11, 11a) comprise a separator of "CYCLONE" type which is known per se.

4. Apparatus according to claim 2 characterised in that said separator means (50) comprise a casing having an air inlet (51) and an air outlet (52), between which are disposed filtering means (55) disposed above a reception hopper (57) and that said riser column (14) is formed by a conduit connected to the lower part of said hopper.

5. Apparatus according to one of claims 3 and 4 characterised in that the powder outlet of said column (14) is a lateral orifice (19).

6. Apparatus according to any one of claims 3 to 5 characterised in that aportion of said riser column (14) is immersed in a reservoir (25) containing powder and provided with (26, 27) for fluidisation of said powder and that said column communicates with said reservoir.

7. Apparatus according to one of claims 3 to 6 characterised in that said means for fluidising said powder in said column comprise a porous plate (15) which is arranged in the bottom part of said column and through which air passes under pressure.

8. Apparatus according to any one of claims 3 to 6 characterised in that the lower end of said riser column (14) which is immersed in said reservoir (25) is substantially completely open (30) so that the fluidisation means of said tank also maintain the fluidisation effect in said column.

9. Apparatus according to claim 8 characterised in that said open lower end (30) of said column comprises a flared collar (31) which promotes maintenance of the fluidisation effect in said column.

EP 0 214 901 B1

FIG.1

FIG.2

1

# FIG. 3

# FIG. 4